# FASCICULE DE BREVET EUROPEEN

(11) **EP 1 849 287 B1**
(45) Date de publication et mention de la délivrance du brevet: **31.05.2017**
(21) Numéro de dépôt: 06777202.0
(22) Date de dépôt: 15.02.2006
(51) Int. Cl.: H04L 29/06

(54) **SYSTÈME À RÉSEAU LOCAL COMPRENANT AU MOINS UN TERMINAL TÉLÉPHONIQUE ET DES TERMINAUX MULTIMÉDIAS**
LAN-SYSTEM MIT MINDESTENS EINEM TELEFON-ENDGERÄT UND MULTIMEDIA-ENDGERÄTEN
LOCAL AREA NETWORK SYSTEM COMPRISING AT LEAST ONE TELEPHONE TERMINAL AND MULTIMEDIA TERMINALS

(30) Priorité: 18.02.2005 FR 0550462
(43) Date de publication de la demande: 31.10.2007
(73) Titulaire: Thomson Licensing, 92130 Issy-les-Moulineaux (FR)
(72) Inventeur: ASTIC, Fabien, F-92000 Nanterre (FR); LE GUYADEC, Pascal, F-75020 Paris (FR); MIGNOT, Patrice, F-78000 Versailles (FR)
(74) Mandataire: Huchet, Anne
(86) Numéro de dépôt international: PCT/EP2006/050972
(87) Numéro de publication internationale: WO 2006/120043

(56) Documents cités:
- WO-A-2004/032456
- US-A1- 2002 022 453

## Description

L'invention est relative à un système à réseau local, notamment un réseau domestique, comprenant au moins un terminal téléphonique et des terminaux multimédias susceptibles de recevoir et/ou d'émettre des données en même temps qu'une conversation téléphonique.

Les terminaux téléphoniques les plus courants, notamment les terminaux de téléphonie fixe sont conçus presque exclusivement pour des conversations téléphoniques, éventuellement pour recevoir des données numériques à faible débit, tel que des messages SMS et/ou MMS. Par contre, sauf les terminaux de vidéophones, qui sont des produits d'usage peu courant, les terminaux téléphoniques ne sont pas susceptibles d'émettre ou recevoir des données vidéos ou des programmes informatiques.

Cependant, le besoin se fait souvent sentir de communiquer, en même temps qu'une conversation téléphonique, des données qui ne sont pas susceptibles d'être traitées par un terminal téléphonique courant. Le document D1:US 2002/022453 A1 (BALOG HORIA ET AL) 21 février 2002 (2002-02-21) décrit le routage d'un contenu vers un terminal sélectionne parmi une pluralité des terminaux, ladite pluralité des terminaux étant associée a un utilisateur. Le terminal sélectionné par D1 est le mieux adapte a recevoir ledit contenu en fonction de ses caractéristiques. Pour permettre des communications de ce type, il est connu d'associer à un terminal téléphonique un ou plusieurs terminaux multimédias, par exemple un ordinateur personnel, ce qui permet aux utilisateurs de se transmettre, simultanément à une conversation téléphonique, des fichiers tels que des courriers électroniques, des photos, des vidéos. Il est également possible d'effectuer des échanges de type vidéophone en associant un terminal téléphonique, un récepteur de télévision, et une caméra vidéo.

L'invention part de la constatation que les systèmes connus d'association de terminaux téléphoniques à des émetteurs et/ou récepteurs de données de type multimédia ne permettent pas de satisfaire de façon suffisante les besoins des utilisateurs.

Le système selon l'invention comprend un dispositif de routage comportant :
- des moyens pour déterminer pour chaque terminal multimédia du réseau local, les paramètres suivants : l'identité du dispositif, le lieu où il est installé, ses capacités et l'état de ce dispositif,
- des moyens pour transférer les données reçues par le réseau local vers le terminal multimédia le plus proche du terminal téléphonique sur lequel est effectuée la communication et/ou vers le terminal multimédia ayant les capacités les mieux adaptées aux données reçues.

Par capacité d'un terminal multimédia on entend les capacités liées à la fonction que doit remplir ce dispositif. Par exemple, pour un ordinateur il s'agit notamment des caractéristiques de son microprocesseur, de la capacité de sa mémoire vive, de la capacité de son disque dur et des caractéristiques du dispositif de visualisation tel que la taille d'écran et la résolution. Par l'état de chaque terminal multimédia, on entend l'état d'arrêt, l'état de veille ou l'état de marche. Pour connaître cet état, il suffit d'une simple connexion du terminal au dispositif de routage.

Avec le système selon l'invention, si le réseau local comprend, pour un même numéro d'abonné, plusieurs terminaux téléphoniques, le dispositif de routage sélectionnera automatiquement le terminal multimédia le plus proche du terminal téléphonique utilisé. Le dispositif de routage peut aussi sélectionner, notamment dans une installation ne comportant qu'un seul terminal téléphonique, le terminal multimédia disponible dont les caractéristiques sont les mieux adaptées au flux de données reçues. Par exemple, si le flux reçu comporte des données vidéos, telles que détectées par des moyens d'analyse du dispositif de routage, ce dernier pourra être programmé pour router automatiquement les données vidéos vers le dispositif multimédia ayant le plus grand écran ou la meilleure résolution. Dans le cas où une caméra vidéo est disponible et prête à émettre des messages, le dispositif de routage est programmé pour choisir automatiquement le dispositif à écran le plus proche de la caméra vidéo. A cet effet, la caméra et le dispositif à écran sont au préalable configurés comme appartenant à un même lieu géographique et/ou sont couplés.

Si l'utilisateur, au cours d'une conversation téléphonique, change de terminal téléphonique, alors le dispositif de routage transfert automatiquement les données vers le ou les dispositifs multimédias le(s) plus proche(s) du second terminal téléphonique.

Le dispositif de routage est, de préférence, réalisé sous forme d'un moyen logiciel qui peut être incorporé dans un dispositif indépendant des terminaux. En variante, le dispositif de routage est incorporé dans un terminal, tel qu'un terminal téléphonique ou dans un terminal multimédia.

Dans une réalisation, pour l'émission de données vers un utilisateur ne se trouvant pas dans le réseau local, le dispositif de routage comporte, selon une réalisation, des moyens pour diriger le flux qui ne peut être utilisé par le terminal téléphonique de l'interlocuteur, vers le dispositif multimédia de cet interlocuteur qui est le plus approprié pour cet interlocuteur. On sait que les protocoles usuels de téléphonie IP, tels que STP et H323, sont tels qu'au cours de l'ouverture d'une session de communication sont échangés et négociés les paramètres de communication selon les capacités des terminaux. Les paramètres de communication sont par exemple les codec utilisés pour les flux voix et vidéo.

Les protocoles de communications entre le dispositif de routage et les terminaux multimédias peuvent être de toute nature, normalisés ou de types propriétaires. A titre d'exemple, non limitatif de protocoles normalisés on citera les protocoles UpnP, JINI Salutation permettant de mettre à disposition de n'importe quel terminal l'ensemble des ressources offertes par le réseau.

Dans une réalisation, le dispositif de routage est connecté à la passerelle d'accès du réseau local au réseau de communication, et commande cette passerelle de façon que les flux de données multimédias soient transférés directement de la passerelle vers les terminaux sélectionnés.

Dans une autre réalisation, on prévoit dans le réseau local un dispositif central du type proxy, recevant les données de la passerelle et les retransmettant aux dispositifs multimédias dans le réseau local. Dans ce cas, le dispositif de routage comporte des moyens de commande de ce dispositif central. Ce dispositif central est également de préférence un produit logiciel disposé, par exemple, dans la passerelle ou dans un terminal téléphonique.

Dans une réalisation, on prévoit un dispositif de commande qui, après la passerelle, dirige les données vers tous les dispositifs multimédias susceptibles de recevoir les données transmises, le dispositif de routage sélectionnant celui des terminaux multimédias qui doit être utilisé. Cette disposition est particulièrement utile quand plusieurs médias s'introduisent dans la communication au fur et à mesure.

Ce dispositif de commande destiné à sélectionner l'ensemble des terminaux multimédias, peut être disposé soit dans le réseau local, soit à l'extérieur entre le réseau extérieur et la passerelle.

L'invention concerne ainsi un dispositif de routage destiné à équiper un réseau local dans lequel au moins un terminal téléphonique est associé à des terminaux multimédias, qui est caractérisé en ce qu'étant destiné à sélectionner automatiquement au moins un terminal multimédia devant recevoir ou émettre un flux en même temps qu'une communication téléphonique est établie, il comporte :
des moyens pour détecter l'emplacement des terminaux, leur état d'utilisation, et leurs capacités, et
des moyens pour sélectionner automatiquement le terminal multimédia qui doit recevoir ou émettre un flux en fonction de son emplacement, et/ou de ses capacités et/ou de sa disponibilité.

Dans une réalisation, le dispositif comprend des moyens pour commander un organe central de commande afin que ce dernier émette vers le, ou reçoive du, terminal multimédia sélectionné, le flux ne passant pas par le terminal téléphonique.

Selon une réalisation, le routage vers le terminal sélectionné est effectué par une passerelle reliant le réseau local à un réseau de communication, et le dispositif comporte des moyens pour commander la passerelle afin que cette dernière émette vers le terminal sélectionné, ou reçoive de ce dernier, le flux à router.

Dans une réalisation, un dispositif de commande dirige les flux entrants dans le réseau local vers tous les terminaux du réseau local, et le dispositif de routage comporte des moyens pour empêcher que les flux entrants soient utilisés par les terminaux non sélectionnés.

Selon une réalisation, le dispositif est incorporé dans un dispositif compris dans le groupe comportant les terminaux et la passerelle reliant le réseau de communication au réseau local.

Dans une réalisation, le dispositif comprend des moyens de programmation pour que l'utilisateur puisse établir des critères de sélection automatique des terminaux multimédias.

L'invention concerne aussi un procédé de gestion d'un réseau local dans lequel au moins un terminal téléphonique est associé à des terminaux multimédias, qui est caractérisé en ce qu'on sélectionne automatiquement au moins un terminal multimédia devant recevoir ou émettre un flux en même temps qu'une communication téléphonique est établie, cette sélection automatique étant effectuée à partir de l'emplacement des terminaux, de leur état d'utilisation et/ou de leur capacité.

Dans une réalisation dans laquelle le réseau local comporte au moins deux terminaux téléphoniques, on sélectionne automatiquement le terminal multimédia adapté au flux concerné qui est le plus proche du terminal téléphonique utilisé.

Dans une réalisation, le terminal multimédia sélectionné automatiquement est celui qui présente les meilleures performances, fonction de ses capacités, pour exploiter le flux à recevoir ou à émettre en même temps que la communication téléphonique.

Selon une réalisation, pour laquelle le réseau local comporte un organe central de commande, ou une passerelle reliant ce réseau local à un réseau de communication, on commande cet organe central de commande, ou la passerelle, afin que les flux reçus soient dirigés vers le terminal ou les terminaux sélectionné(s).

Dans une réalisation, tous les flux entrants dans le réseau local sont dirigés vers tous les terminaux de ce réseau, et après la sélection automatique, on empêche que les terminaux non sélectionnés puissent utiliser les flux entrants.

Les critères de sélection automatique des terminaux multimédias sont par exemple programmables.

D'autres caractéristiques et avantages de l'invention apparaîtront avec la description de certains de ses modes de réalisation, celle-ci étant effectuée en se référant aux figures ci-annexées sur lesquelles :
la figure 1 représente un système conforme à l'invention, et
les figures 2 à 4 représentent trois modes de réalisation de l'invention.

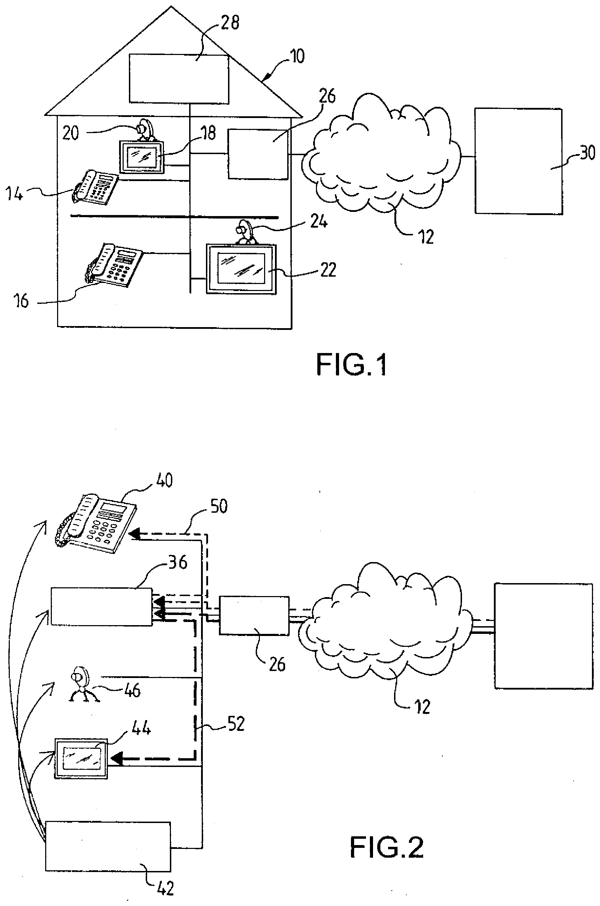

On a représenté sur la figure 1 un réseau local tel qu'un réseau domestique 10 connecté à un réseau de communication, par exemple le réseau Internet 12.

Dans l'exemple représenté le réseau local comporte deux terminaux téléphoniques, à savoir un terminal téléphonique 14 disposé dans une chambre, et un terminal téléphonique disposé dans une autre pièce telle qu'un salon. A proximité du terminal 14 se trouve un ordinateur 18 et une caméra vidéo 20.

A proximité du terminal téléphonique 16 se trouve, d'une part, un récepteur de télévision 22, et d'autre part, une autre caméra vidéo 24.

La liaison du réseau local au réseau de communication 12 s'effectue, de façon classique, par une passerelle 26.

Selon l'invention, le réseau 10 comporte, en outre, un dispositif de routage 28 relié à tous les terminaux du réseau local, y compris à la passerelle 26, pour commander le routage du flux reçu de la passerelle 26 vers le terminal multimédia le plus approprié au flux reçu et qui ne peut être traité par le terminal téléphonique.

Le dispositif de routage 28 comporte un moyen pour enregistrer l'identité et l'emplacement de chacun des dispositifs du réseau, y compris les terminaux téléphoniques. Ce dispositif de routage comporte aussi des moyens pour recevoir de chacun des terminaux du réseau local, ses caractéristiques, ses capacités et sa disponibilité. Il comporte aussi des moyens d'analyse des flux reçus.

Au cours d'une session de communication, le dispositif 28, après analyse du flux reçu, route de façon automatique ce flux vers le terminal multimédia le plus approprié. Le terminal le plus approprié est déterminé en fonction de l'analyse et des caractéristiques des dispositifs et de leur disponibilité.

Ainsi dans l'exemple représenté, un flux reçu d'un terminal multimédia 32 connecté au réseau 12 est associé aussi à un terminal téléphonique (non montré) et dirigé, grâce au dispositif 28, vers l'ordinateur 18 si, c'est le terminal téléphonique 14 qui est en conversation, ou vers le téléviseur 22 si c'est le terminal téléphonique 16 qui est utilisé pour la conversation téléphonique.

Dans le cas d'une communication du type vidéo conférence, la caméra 24 est utilisée si le téléviseur 22 a été sélectionné et, dans le cas contraire, c'est la caméra 20 qui est utilisée quand c'est l'ordinateur 18 qui a été sélectionné.

Si lors de la communication téléphonique, certains paramètres se modifient, par exemple si l'utilisateur transfère sa communication du terminal 14 vers le terminal 16, alors, automatiquement, le dispositif de routage 28 sélectionne le dispositif ou terminal multimédia le plus proche du terminal téléphonique.

Dans l'exemple, le dispositif 28 est programmable par l'utilisateur de façon que ce dernier puisse imposer des critères tels que, par exemple, pour certains types de flux, choisir exclusivement l'un des terminaux multimédias.

Dans une réalisation, on prévoit plusieurs dispositifs de routage.

L'exemple représenté sur la figure 2 concerne une réalisation qui s'adapte à une session de communication de type unique, c'est-à-dire un seul appel téléphonique gérant les flux audio, vidéo et données.

Dans cet exemple, le réseau local comporte un dispositif central de commande 36 par lequel passent tous les flux provenant de la passerelle 26 et destinés à cette dernière passerelle. Ce dispositif 36 est, par exemple, intégré à la passerelle 26 ou intégré à un terminal téléphonique 40.

Ainsi, tous les flux entrants et sortants pas sent par ce dispositif 36. Dans ce cas, le dispositif de routage 42, qui est connecté à tous les terminaux du réseau local, c'est-à-dire au terminal téléphonique 40 ainsi qu'aux terminaux multimédias 44 (dispositif d'affichage) et 46 (caméra vidéo), est également relié au dispositif de commande 36. Le dispositif de routage 42 commande le dispositif central 36 pour qu'il route les flux vers les dispositifs appropriés.

Les protocoles utilisés entre le dispositif 36 et les terminaux sont, par exemple, les protocoles SIP, H323, ou UPnP audio/vidéo.

Sur la figure 2, on a représenté en traits interrompus 50 de faible épaisseur les flux de voix, et en traits interrompus 52 d'épaisseur plus importante les flux vidéos.

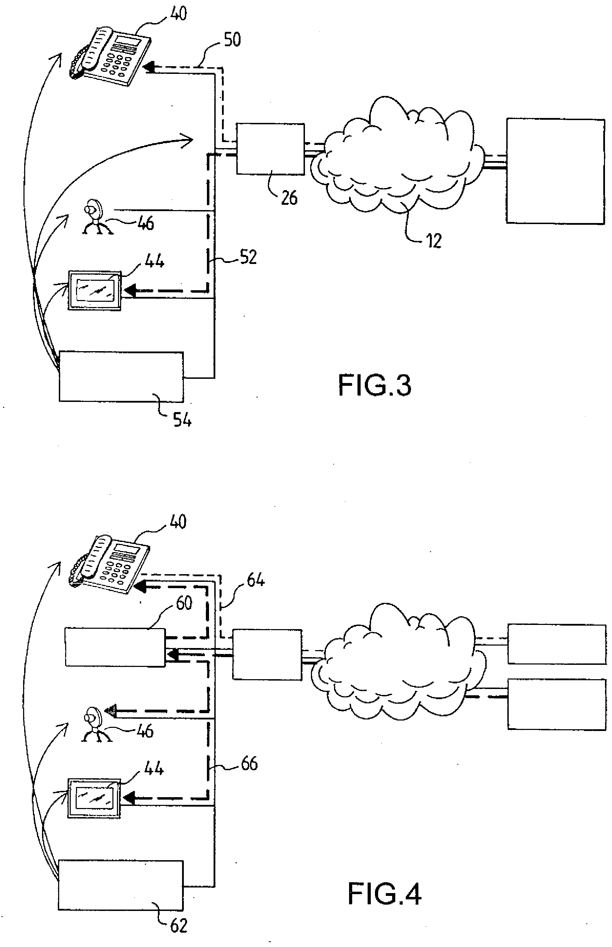

Sur la figure 3, on a indiqué par les mêmes chiffres de référence les éléments qui correspondent à ceux de la figure 2.

Ce mode de réalisation se distingue de celui représenté sur la figure 2 par le fait que le dispositif de routage 54 commande directement la passerelle 26 pour que celle-ci assure le routage déterminé par ce dispositif 54. Autrement dit, dans cet exemple, on ne prévoit pas de dispositif central de commande (ayant la référence 36 dans la réalisation de la figure 2).

Quand un nouveau terminal multimédia intervient au cours d'une communication téléphonique, le dispositif 54 commande une nouvelle route à la passerelle 26 pour acheminer le nouveau flux vers le terminal multimédia sélectionné. Cette nouvelle route est déterminée à partir de la négociation effectuée, de façon connue, lors de la session de communication entre terminaux IP, cette session constituant le préalable à l'établissement d'une communication IP entre terminaux.

Dans l'exemple représenté sur la figure 4, on prévoit un dispositif de commande de session 60 pour permettre une multiplicité de sessions de communication.

Dans cet exemple, le dispositif 60 adresse les appels à tous les terminaux 40, 44, 46 et le dispositif de routage 62 est programmé pour sélectionner les terminaux qui seront utilisés dans l'appel et pour inhiber les terminaux non sélectionnés, c'est-à-dire pour empêcher que ces terminaux non sélectionnés utilisent les flux entrants.

Sur la figure 4, les traits interrompus fins 64 représentent une communication de voix qui a été établie tandis que les traits interrompus épais 66 représentent des appels de communication vidéo.

Dans cet exemple, le dispositif 60 est disposé soit dans le réseau local soit à l'extérieur.

## Revendications

1. Dispositif de routage (28 ;42 ;54 ;62) destiné à équiper un réseau local dans lequel au moins un terminal téléphonique (14 ;16 ;40) est associé à une pluralité de terminaux multimédias (18 ; 20 ;22; 24 ; 44 ; 46), **caractérisé en ce qu'**il comporte:
- des moyens pour détecter l'emplacement de ladite pluralité de terminaux multimédias associée à un premier terminal téléphonique, leur état d'utilisation, leurs capacités, et l'emplacement dudit premier terminal téléphonique et
- des moyens pour sélectionner automatiquement dans ladite pluralité de terminaux multimédias, quand une communication téléphonique est établie avec ledit premier terminal téléphonique, au moins un terminal multimédia, le terminal multimédia étant adapté pour recevoir ou émettre un flux de données en même temps que la communication téléphonique est établie avec ledit premier terminal téléphonique, ladite sélection automatique étant fonction de l'emplacement dudit premier terminal multimédia, de ses capacités, de son état d'utilisation et de l'emplacement dudit terminal téléphonique.

2. Dispositif selon la revendication 1, **caractérisé en ce qu'**il comprend des moyens pour commander un organe central de commande (36) afin que ce dernier émette vers le, ou reçoive du, terminal multimédia sélectionné, le flux ne passant pas par le terminal téléphonique.

3. Dispositif selon la revendication 1, **caractérisé en ce que** le routage vers le terminal sélectionné étant effectué par une passerelle (26) reliant le réseau local à un réseau de communication (12), il comporte des moyens pour commander la passerelle afin que cette dernière émette vers le terminal sélectionné, ou reçoive de ce dernier, le flux à router.

4. Dispositif selon la revendication 1, **caractérisé en ce qu'**un dispositif de commande (60) dirigeant les flux entrants dans le réseau local vers tous les terminaux du réseau local, le dispositif de routage (62) comporte des moyens pour empêcher que les flux entrants soient utilisés par des terminaux non sélectionnés.

5. Dispositif selon l'une quelconque des revendications précédentes, **caractérisé en ce qu'**il est incorporé dans un dispositif compris dans le groupe comportant les terminaux et la passerelle (26) reliant le réseau de communication (12) au réseau local.

6. Dispositif selon l'une quelconque des revendications précédentes, **caractérisé en ce qu'**il comprend des moyens de programmation permettant d'établir des critères de sélection automatique des terminaux multimédias.

7. Procédé de routage, à mettre en oeuvre dans un dispositif de routage d'un réseau local dans lequel au moins un terminal téléphonique est associé à une pluralité de terminaux multimédias (18 ; 20 ; 22 ; 24 ; 44 ; 46), ledit procédé de routage étant **caractérisée en ce qu'**il comprend :
- détecter l'emplacement de ladite pluralité de terminaux multimédias associée audit terminal téléphonique, leur état d'utilisation, leurs capacités, et l'emplacement dudit terminal téléphonique, et
quand une communication téléphonique est établie avec ledit terminal téléphonique, sélectionner automatiquement dans ladite pluralité de terminaux multimédias, au moins un terminal multimédia, le terminal multimédia étant adapté pour recevoir ou émettre un flux de données en même temps qu'une communication téléphonique est établie par ledit terminal téléphonique, la sélection automatique étant effectuée à partir de l'emplacement dudit terminal multimédia et de l'emplacement dudit terminal téléphonique.

8. Procédé selon la revendication 7, **caractérisé en ce que** le réseau local comportant au moins deux terminaux téléphoniques, le terminal multimédia sélectionné automatiquement est le terminal multimédia adapté au flux concerné le plus proche du terminal téléphonique utilisé.

9. Procédé selon la revendication 7 ou 8, **caractérisé en ce que** le terminal multimédia sélectionné automatiquement est celui qui présente les meilleures performances, fonction de ses capacités, pour exploiter le flux à recevoir ou à émettre en même temps que la communication téléphonique.

10. Procédé selon l'une des revendications 7 à 9, **caractérisé en ce que** le réseau local comportant un organe central de commande, ou une passerelle relient ce réseau local à un réseau de communication, le procédé comprend :
- commander ledit organe central de commande, ou ladite passerelle, afin que les flux soient dirigés vers le terminal ou les terminaux sélectionné(s).

11. Procédé selon l'une des revendications 7 à 9, **caractérisé en ce que** tous les flux entrants dans le réseau local sont dirigés vers tous les terminaux de ce réseau, et **en ce que** le procédé comprend :
- après ladite sélection automatique, empêcher que les terminaux non sélectionnés puissent utiliser les flux entrants.

12. Procédé selon l'une des revendications 7 à 11, **caractérisé en ce que** les critères pour sélectionner automatiquement au moins un terminal multimédia sont programmables.

## Patentansprüche

1. Routing-Vorrichtung (28; 42; 54; 62), bestimmt zur Ausstattung eines lokalen Netzwerks, in dem mindestens ein Telefon-Endgerät (14; 16; 40) mit einer Mehrzahl an Multimedia-Endgeräten (18; 20; 22; 24; 44; 46) verbunden ist, **dadurch gekennzeichnet, dass** es besteht aus:
- Mitteln zur Erfassung des Standortes der besagten Mehrzahl an Multimedia-Endgeräten, die mit einem ersten Telefon-Endgerät verbunden ist, ihres Nutzungszustandes, ihrer Kapazitäten, und des Standortes des besagten ersten Telefon-Endgerätes, und
- Mitteln zur automatischen Auswahl aus der besagten Mehrzahl an Multimedia-Endgeräten, wenn ein Telefongespräch mit dem besagten ersten Telefon-Endgerät hergestellt wird, von mindestens einem Multimedia-Endgerät, wobei das Multimedia-Endgerät so ausgelegt ist, einen Datenstrom zur gleichen Zeit zu empfangen oder auszusenden, zu der das Telefongespräch mit dem besagten ersten Telefon-Endgerät hergestellt wird, wobei die genannte automatische Auswahl entsprechend dem Standort des besagten ersten Multimedia-Endgerätes, seiner Kapazitäten, seinem Nutzungszustand und dem Standort des besagten Telefon-Endgerätes erfolgt.

2. Vorrichtung nach Anspruch 1, **dadurch gekennzeichnet, dass** sie Mittel zur Steuerung eines zentralen Steuerungsorgans (36) umfasst, damit letzteres an das ausgewählte Multimedia-Endgerät den Datenstrom sendet oder von ihm empfängt, der nicht über das Telefon-Endgerät läuft.

3. Vorrichtung nach Anspruch 1, **dadurch gekennzeichnet, dass** das Routing zum gewählten Endgerät durch ein Gateway (26) erfolgt, welches das lokale Netzwerk mit einem Kommunikationsnetzwerk (12) verbindet, ausgestattet mit Mitteln zur Steuerung des Gateways, damit dieses letztere den zu routenden Datenstrom an das ausgewählte Endgerät sendet oder von diesem erhält.

4. Vorrichtung nach Anspruch 1, **dadurch gekennzeichnet, dass** eine Steuerungsvorrichtung (60) die in das lokale Netzwerk eingehenden Datenströme zu allen Endgeräten des lokalen Netzwerks lenkt, und die Routing-Vorrichtung (62) Mittel umfasst, um die Verwendung der eingehenden Datenströme durch nicht ausgewählte Endgeräte zu verhindern.

5. Vorrichtung nach einem der vorstehenden Ansprüche, **dadurch gekennzeichnet, dass** sie in eine Vorrichtung eingebaut ist, die in der Gruppe enthalten ist, die die Endgeräte und das Gateway (26), welches das Kommunikationsnetzwerk (12) mit dem lokalen Netzwerk verbindet, umfasst.

6. Vorrichtung nach einem der vorstehenden Ansprüche, **dadurch gekennzeichnet, dass** sie Mittel zur Programmierung enthält, die die Festlegung von Kriterien zur automatischen Auswahl der Multimedia-Endgeräte ermöglichen.

7. Routing-Verfahren, umzusetzen in einer Routing-Vorrichtung eines lokalen Netzwerks, in dem mindestens ein Telefon-Endgerät mit einer Mehrzahl an Multimedia-Endgeräten (18; 20; 22; 24; 44; 46) verbunden ist, wobei das besagte Routing-Verfahren **dadurch gekennzeichnet ist, dass** es Folgendes umfasst:
- Erfassung des Standortes der besagten Mehrzahl an Multimedia-Endgeräten, die mit dem besagten Telefon-Endgerät verbunden ist, ihres Nutzungszustandes, ihrer Kapazitäten, und des Standortes des besagten ersten Telefon-Endgerätes, und,
wenn ein Telefongespräch mit dem besagten Telefon-Endgerät hergestellt wird, automatische Auswahl aus der besagten Mehrzahl an Multimedia-Endgeräten von mindestens einem Multimedia-Endgerät, wobei das Multimedia-Endgerät so ausgelegt ist, einen Datenstrom zur gleichen Zeit zu empfangen oder auszusenden, zu der das Telefongespräch mit dem besagten Telefon-Endgerät hergestellt wird, wobei die automatische Auswahl ausgehend von dem Standort des besagten Multimedia-Endgerätes und dem Standort des besagten Telefon-Endgerätes erfolgt.

8. Verfahren nach Anspruch 7, **dadurch gekennzeichnet, dass** das lokale Netzwerk mindestens zwei Telefon-Endgeräte umfasst, und es sich bei dem automatisch ausgewählten Multimedia-Endgerät um das Multimedia-Endgerät handelt, das für den Datenstrom ausgelegt ist, der sich am nächsten am verwendeten Telefon-Endgerät befindet.

9. Verfahren nach Anspruch 7 oder 8, **dadurch gekennzeichnet, dass** es sich bei dem automatisch ausgewählten Multimedia-Endgerät um jenes handelt, das die besten Leistungen entsprechend seinen Kapazitäten aufweist, um den zu erhaltenden oder auszusendenden Datenstrom zur gleichen Zeit des Telefongesprächs auszunutzen.

10. Verfahren nach einem der Ansprüche 7 bis 9, **dadurch gekennzeichnet, dass** das lokale Netzwerk ein zentrales Steuerungsorgan enthält oder ein Gateway, das dieses lokale Netzwerk mit einem Kommunikationsnetzwerk verbindet, wobei das Verfahren umfasst:
- Steuerung des besagten zentralen Steuerungsorgans oder des besagten Gateways, um die Datenströme zu dem oder den ausgewählten Endgerät oder Endgeräten zu lenken.

11. Verfahren nach einem der Ansprüche 7 bis 9, **dadurch gekennzeichnet, dass** alle in das lokale Netzwerk eingehenden Datenströme zu allen Endgeräten dieses Netzwerkes gelenkt werden, und dadurch, dass das Verfahren umfasst:
- nach der besagten automatischen Auswahl zu verhindern, dass die nicht ausgewählten Endgeräte die eingehenden Datenströme verwenden können.

12. Verfahren nach einem der Ansprüche 7 bis 11, **dadurch gekennzeichnet, dass** die Kriterien zur automatischen Auswahl von mindestens einem Multimedia-Endgerät programmierbar sind.

## Claims

1. Routing device (28; 42; 54; 62) intended to equip a local network in which at least one telephone terminal (14; 16; 40) is associated with a plurality of multimedia terminals (18; 20; 22; 24; 44; 46), **characterised in that** it comprises:
- means for detecting the location of said plurality of multimedia terminals associated with a first telephone terminal, their use status, their capacities, and the location of said first telephone terminal and
- means for automatically selecting from said plurality of multimedia terminals, when a telephone communication is set up with said first telephone terminal, at least one multimedia terminal, the multimedia terminal being adapted to receive or send a data stream at the same time as the telephone communication is set up with said first telephone terminal, said automatic selection being dependent on the location of said first multimedia terminal, of its capacities, its use status and the location of said telephone terminal.

2. Device according to claim 1, **characterised in that** it comprises means for controlling a central control unit (36) so that the latter sends to the, or receives from the selected multimedia terminal, the stream not passing through the telephone terminal.

3. Device according to claim 1, **characterised in that** the routing to the selecting terminal being carried out by a gateway (26) connecting the local network to a communication network (12), it comprises means for controlling the gateway so that the latter sends to the selected terminal, or receives from the latter, the stream to route.

4. Device according to claim 1, **characterised in that** a control device (60) directing the streams incoming in the local network to all the terminals of the local network, the routing device (62) comprises means for preventing the incoming streams from being used by non-selected terminals.

5. Device according to any one of the preceding claims, **characterised in that** it is incorporated into a device included in the group comprising the terminals and the gateway (26) connecting the communication network (12) to the local network.

6. Device according to any one of the preceding claims, **characterised in that** it comprises programming means enabling automatic selection criteria to be set up for multimedia terminals.

7. Routing method, to implement in a routing device of a local network in which at least one telephone terminal is associated with a plurality of multimedia terminals (18; 20; 22; 24; 44; 46), said routing method being **characterised in that** it comprises:
- detecting the location of said plurality of multimedia terminals associated with said telephone terminal, their use status, their capacities, and the location of said telephone terminal, and
when a telephone communication is set up with said telephone terminal, automatically selecting in said plurality of multimedia terminals, at least one multimedia terminal, the multimedia terminal being adapted to receive or send a data stream at the same time as a telephone communication is set up by said telephone terminal, the automatic selection being done from the location of said multimedia terminal and from the location of said telephone terminal.

8. Method according to claim 7, **characterised in that** the local network comprising at least two telephone terminals, the automatically selected multimedia terminal is the multimedia terminal adapted to the closest relevant stream of the telephone terminal used.

9. Method according to claim 7 or 8, **characterised in that** the automatically selected multimedia terminal is the one that has the best performances, depending on its capacities, for exploiting the stream to receive or send at the same time as the telephone communication.

10. Method according to one of claims 7 to 9, **characterised in that** the local network comprising a central control unit, or a gateway connects this local network to a communication network, the method comprises:
- controlling said central control unit, or said gateway, so that the flows are directed to the selected terminal or terminals.

11. Method according to one of claims 7 to 9, **characterised in that** all the streams incoming in the local network are directed to all the terminals of this network, and that the method comprises:
- after said automatic selection, preventing the non-selected terminals from using the incoming flows.

12. Method according to one of claims 7 to 11, **characterised in that** the criteria for automatically selecting at least one multimedia terminal are programmable.
